**Europäisches Patentamt**

**European Patent Office**

**Office européen des brevets**

(11) Publication number: **0 167 928**
**B1**

## (12) EUROPEAN PATENT SPECIFICATION

(45) Date of publication of patent specification: **25.04.90**

(21) Application number: **85107914.5**

(22) Date of filing: **26.06.85**

(51) Int. Cl.⁵: **B 60 J 1/10**

(54) Clip for fixing vehicle window glass.

(30) Priority: **03.07.84 JP 99647/84 u**

(43) Date of publication of application:
**15.01.86 Bulletin 86/03**

(45) Publication of the grant of the patent:
**25.04.90 Bulletin 90/17**

(84) Designated Contracting States:
**DE FR GB**

(56) References cited:
**GB-A-2 010 380**
**JP-U-56 031 912**
**JP-U-56 116 218**
**US-A-4 197 688**
**US-A-4 389 068**

(73) Proprietor: **TOYOTA JIDOSHA KABUSHIKI
KAISHA
1, Toyota-cho Toyota-shi
Aichi-ken 471 (JP)**

(72) Inventor: **Fujikawa, Yoshiro
101-5, Katahira, Oshima-cho
Toyota-shi Aichi-ken (JP)**

(74) Representative: **Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2 (DE)**

## Description

### Field of the Invention

This invention disclosed herein belongs to the field of art of clips used for mounting glass windows or the like of a vehicle on a vehicle body panel, as described in the precharacterizing part of claim 1.

### Description of the Prior Art

With increasing requirement for better interior accommodation and external appearance of automobiles in recent hears, there has been a tendency toward neat and simple style and appearance of the whole car body, and in line with such tendency, attempts have been made to minimize the rise of said molding strip above the window glass level.

As illustrated in Figs. 4 and 5, window glass 2 of a vehicle 1 is supported by a protuberance 6 of a vehicle window glass fixing clip 5 secured to a vehicle panel 3 by screw(s) 4, and a molding strip 7 is adapted to cover said clip 5. In such arrangement, to meet said requirement, the height H from the upper surface of window glass 2 to the molding strip 7 tends to be reduced to a minimal height *h* shown in Fig. 6.

With said conventional clip, to secure the minimal height *h* (distance from window glass 2 to molding strip 7), protuberance 6 of clip 5 must be provided at a position close to window glass 2; therefore, great skill was required to set molding strip 7.

If protuberance 6 of clip 5 is positioned far from window glass 2 to facilitate said molding strip setting, a level difference will be created along the edge of window glass 2 to impair the appearance.

Further, much time is required for the mounting task with conventional clips, thereby making this an expensive project.

### Summary of the Invention

The object of the present invention is to provide an excellent vehicle window glass fixing clip which is not only capable of securely fixing window glass in position but can also reduce the level difference between window glass and molding to improve appearance while facilitating mounting, thus eliminating said problems of prior art and benefiting the field of utilization of vehicle bodies in the vehicle industries. This object is achieved by the features of the characterizing part of claim 1.

### Brief Description of the Drawings

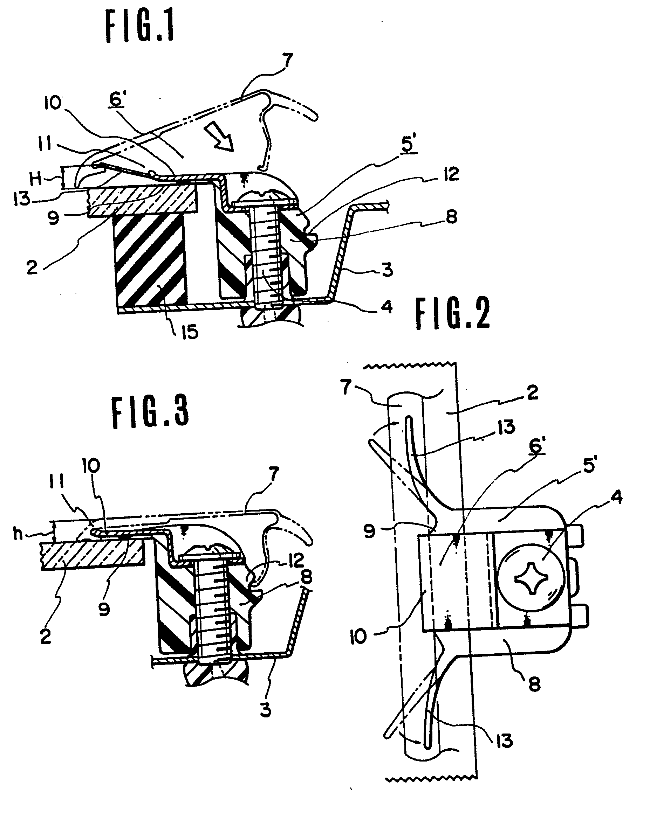

Fig. 1 is a sectional view showing installation of the invention.

Fig. 2 is a plane view of Fig. 1.

Fig. 3 is a sectional view after installation has been completed.

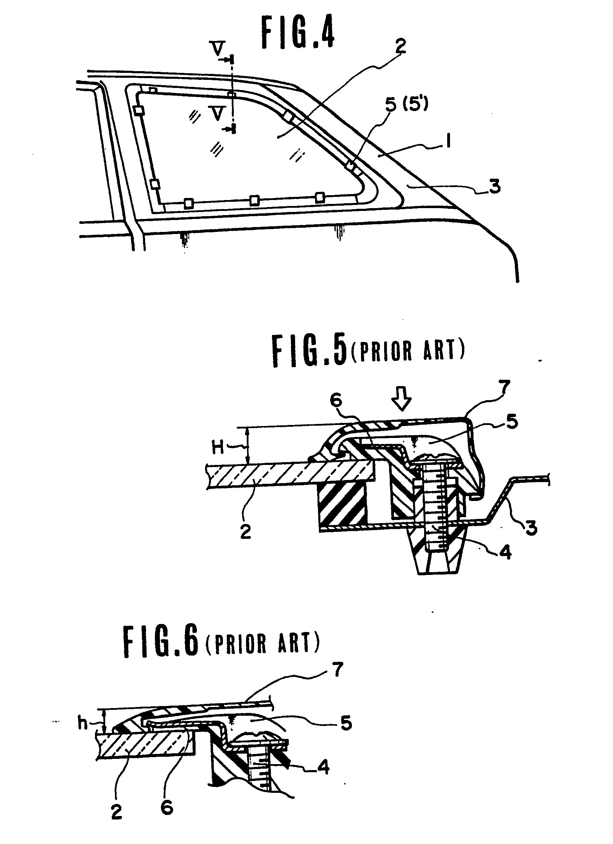

Fig. 4 is a partial side view of the rear of a vehicle.

Figs. 5 and 6 are sectional views showing the conventional practice.

### Detailed Description of the Preferred Embodiment

An embodiment of the present invention will be described below based on Figs. 1, 2 and 3 while having a reference to Fig. 4.

As illustrated in Fig. 4, each vehicle window glass fixing clip (hereinafter referred to simply as clip) 5' is provided along the edge of window glass 2 of a vehicle, and as illustrated in Fig. 1, the clip body 8, or the body portion of said clip 5', is secured to a vehicle panel 3 by means of a screw 4, and a protuberance 6' formed at one end of said clip body holds window glass 2.

Said protuberance 6' consists of a protuberant portion 9 protruding from said clip body 8 integrally therewith toward window glass 2 and a crank-like retaining bracket 10 secured to clip body 8 by said screw 4, the end of said retaining bracket 10 being slightly bent upwardly to serve as an engaging edge portion 11 of said protuberance 6' for engaging and fixing a molding strip 7 in position in collaboration with a stepped portion 12 formed at the other end of said clip body 8.

It will be noted that said clip 5' is so designed that the height *h* is minimum in the state where the molding strip 7 has been set in position as shown in Fig. 3.

As illustrated in Fig. 2, the protuberance 6' consisting of said projecting region 9 and retaining bracket 10 is further provided integrally with a pair of elastic guide protrusions 13, 13 which project out aslant upwardly of window glass 2 from said protuberance 6' and which are so designed that they can be housed in said molding strip 7.

According to this arrangement, the height *h* or distance from window glass 2 to molding 7 after assembling is small as shown in Fig. 3, but there is provided an ample space H between window glass 2 and guide protrusions 13, 13 to facilitate mounting the molding strip 7. Sealant 15 is provided between window glass 2 and vehicle panel 3.

### Example — Action:

In the above-described construction, window glass 2 fitted to panel 3 with the aid of sealant 15 is secured in position by clip 5' fixed to panel 3 with screw 4.

To fit a molding strip 7 to the engaging edge portion 11 of retaining bracket 10 of protuberance 6' of said clip body and its stepped portion 12, said molding strip 7 is first hitched to guide protrusions 13, 13 extending from both sides of said protuberance 6' then pulled outwardly as shown by arrow in Fig. 1. When said molding strip 7 guided by said guide protrusions 13, 13 is pulled until said guide protrusions 13, 13 are brought into a fully spread-out state, said molding strip is automatically fitted with said engaging edge portion 11 of retaining bracket 10.

Said molding strip 7 is then pressed down in the direction of the arrow until it engages the stepped portion 12 of clip body 8, completing the mounting of molding strip 7 which is securely held in position by the elasticity of guide protrusions 13, 13.

This mounting operation is facilitated by an ample space H between window glass 2 and guide protrusions 13, 13. Thus, by a simple operation, merely pulling and pressing down, molding strip 7 can be smoothly set in position without requiring any high skill even though the height *h* from window glass 2 to molding strip 7 is small as shown in Fig. 3.

The modes of practice of the present device are of course not limited to the above-shown embodiments, and it is possible to employ various other forms of embodiment. For instance, the protuberance may be molded integral with the clip body.

According to the present invention, there are basically provided the following prominent effects: the difficulty in mounting a molding strip due to the reduced height from window glass surface to molding strip is eliminated; both external appearance and workability are bettered; and skill is not required for the installation.

Also, owing to the provision of elastic guide protrusions extending from both sides of the protuberance upwardly of window glass and designed to be housed in said molding strip, the molding strip can be securely set in position in an elastic way, increasing the reliability of the device.

Further, since installation can be accomplished in a short time without requiring skill, a cost reduction can be realized.

## Claims

1. A clip for fixing vehicle window glass comprising a clip body (8) to be secured to a vehicle panel (2), said clip body having at its one end a protuberance (6) designed to press the window glass to be set to said panel, said protuberance (6, 6') has a retaining bracket (9, 10) lying against the outer surface of the window glass (2), the retaining bracket (9, 10) being provided with an engaging edge portion (11) for locating in the longitudinal slot formed by an inverted edge portion of a molding strip (7), whereby the engaging edge portion (11) maintains said inverted edge portion in close proximity to the outer surface of the window glass (2) when the opposite longitudinal edge portion of the molding strip (7) is in engagement with a stepped portion of the clip body (8), characterized in that said protuberance (6) is provided at both sides thereof with elastic guide protrusions (13, 13') that extend upwardly from the protuberance with their ends adapted to locate in said longitudinal slot at a distance from the outer surface of the window glass before clipping the molding strip (7) into its secured position.

2. A vehicle window glass fixing clip according to Claim 2, wherein engaging edge portion (11) of said retaining bracket (9, 10) is bent upwardly.

3. A vehicle window glass fixing clip according to Claim 1, wherein said guide protrusions are provided as a pair extending out symmetrically to each other.

## Patentansprüche

1. Halter zur Befestigung eines Türfensterglases, mit einem Klemmkörper (8), der an einem Fahrzeugblech (3) befestigt ist, wobei der Klemmkörper an seinem einen Ende eine Ausstülpung (6) aufweist, die vorgesehen ist, um das Fensterglas gegen das Blech zu drücken, wobei die Ausstülpung (6, 6') einen Rückhaltebügel (9, 10) aufweist, der gegen die äußere Oberfläche des Fensterglases (2) anliegt, wobei der Rückhaltebügel (9, 10) mit einem Eingriffsrandabschnitt (11) versehen ist, der in dem länglichen Schlitz angeordnet ist, der durch den umgekehrten Randabschnitt eines Formstreifens (7) gebildet ist, wodurch der Eingriffsrandabschnitt (11) den umgekehrten Randabschnitt in großer Nähe zur äußeren Oberfläche des Fensterglases (2) hält, wenn der entgegengesetzte längliche Randabschnitt des Formstreifens (7) in Eingriff mit einem abgestuften Abschnitt des Klemmkörpers (8) ist, dadurch gekennzeichnet, daß die Ausstülpung (6) an ihren beiden Seiten mit elastischen Führungsvorsprüngen (13, 13') versehen ist, die sich von der Ausstülpung nach oben erstrecken, wobei ihre Enden so angepaßt sind, daß sie in dem länglichen Schlitz in einem Abstand von der äußeren Oberfläche des Türglases angeordnet sind, bevor der Formstreifen (7) in seine befestigte Stellung geklemmt wird.

2. Halter zur Befestigung eines Türfensterglases nach Anspruch 1, bei dem der Eingriffsrandabschnitt (11) des RÜckhaltebügels (9, 10) nach oben gebogen ist.

3. Halter zur Befestigung eines Türfensterglases nach Anspruch 1, bei dem die Führungsvorsprünge als sich symmetrisch zueinander erstreckendes Paar ausgebildet sind.

## Revendications

1. Une bride de fixation de vitre de véhicule comprenant un corps de bride (8) à fixer sur un panneau de véhicule (2), ledit corps de bride présentant à une extrémité une protubérance (6) conçue pour presser la vitre à installer contre ledit panneau, ladite protubérance (6, 6') présentant un support de retenue (9, 10) reposant contre la surface externe de la vitre (2), le support de retenue (9, 10) étant pourvu d'une partie de bord de contact (11) destinée venir se placer dans la fente longitudinale formée par une partie de bord inversée d'une bande de moulure (7), de manière que la partie de bord de contact (11) maintienne ladite partie de bord inversée à proximité immédiate de la surface externe de la vitre (2) lorsque la partie de bord longitudinale opposée de la bande de moulure (7) est en contact avec une partie étagée du corps de bride (8), caractérisée en ce que ladite protubérance (6) est pourvue des deux côtés de saillies élastiques de guidage (13, 13') qui s'étendent vers le haut depuis la protubérance, leurs extrémités étant susceptible de se loger dans ladite fente longitudinale depuis la surface extérieure de la vitre avant de pincer la bande de moulure (7) dans sa position de fixation.

2. Une bride de fixation de vitre de véhicule selon la revendication 1, dans laquelle la partie de bord de contact (11) dudit support de retenue (9, 10) est incurvée vers le haut.

3. Une bride de fixation de vitre de véhicule selon la revendication 1, dans laquelle lesdites saillies de guidage sont réalisées par deux; chacune s'étendant symétriquement par rapport à l'autre.

# FIG.1

# FIG.2

# FIG.3

# FIG.4

# FIG.5 (PRIOR ART)

# FIG.6 (PRIOR ART)